# EUROPÄISCHE PATENTSCHRIFT

(11) **EP 2 210 234 B1**
(45) Veröffentlichungstag und Bekanntmachung des Hinweises auf die Patenterteilung: **26.06.2013**
(21) Anmeldenummer: 08802744.6
(22) Anmeldetag: 02.10.2008
(51) Int. Cl.: G06T 7/00

(54) **VERFAHREN ZUR ANPASSUNG EINES OBJEKTMODELLS AN EINE DREIDIMENSIONALE PUNKTWOLKE**
METHOD FOR ADAPTING AN OBJECT MODEL TO A THREE-DIMENSIONAL POINT CLOUD
PROCÉDÉ POUR ADAPTER UN MODÈLE D'OBJET À UN NUAGE DE POINTS TRIDIMENSIONNEL

(30) Priorität: 09.10.2007 DE 102007048320
(43) Veröffentlichungstag der Anmeldung: 28.07.2010
(73) Patentinhaber: Pilz GmbH & Co. KG, 73760 Ostfildern (DE)
(72) Erfinder: BARROIS, Bjoern, 89231 Neu-Ulm (DE); KRUEGER, Lars, 89073 Ulm (DE); WOEHLER, Christian, 72535 Heroldstatt (DE)
(74) Vertreter: Witte, Weller & Partner
(86) Internationale Anmeldenummer: PCT/EP2008/008337
(87) Internationale Veröffentlichungsnummer: WO 2009/049774

(56) Entgegenhaltungen:
- SCHMIDT, JOACHIM ; WÖHLER, CHRISTIAN ; KRÜGER, LARS ; GÖVERT, TOBIAS ; HERMES, CHRISTOPH: "3D Scene Segmentation and Object Tracking in Multiocular Image Sequences" THE 5TH INTERNATIONAL CONFERENCE ON COMPUTER VISION SYSTEMS, 2007, [Online] 21. März 2007 (2007-03-21), - 23. März 2007 (2007-03-23) XP002514958 Bielefeld Gefunden im Internet: URL:http://biecoll.ub.uni-bielefeld.de/vol ltexte/2007/29> [gefunden am 2009-02-13] in der Anmeldung erwähnt
- TERUI F ET AL: "Motion Estimation to a Failed Satellite on Orbit using Stereo Vision and 3D Model Matching" CONTROL, AUTOMATION, ROBOTICS AND VISION, 2006. ICARCV '06. 9TH INTERN ATIONAL CONFERENCE ON, IEEE, PI, 1. Dezember 2006 (2006-12-01), Seiten 1-8, XP031103189 ISBN: 978-1-4244-0341-7
- BERTOZZI M ET AL: "Stereo Vision-based approaches for Pedestrian Detection" COMPUTER VISION AND PATTERN RECOGNITION, 2005 IEEE COMPUTER SOCIETY CONFERENCE ON, IEEE, PISCATAWAY, NJ, USA, 25. Juni 2005 (2005-06-25), Seite 16, XP031259653 ISBN: 978-0-7695-2372-9
- RADU BOGDAN RUSU ET AL: "Towards 3D object maps for autonomous household robots" INTELLIGENT ROBOTS AND SYSTEMS, 2007. IROS 2007. IEEE/RSJ INTERNATIONAL CONFERENCE ON, IEEE, PISCATAWAY, NJ, USA, 1. Oktober 2007 (2007-10-01), Seiten 3191-3198, XP031188261 ISBN: 978-1-4244-0911-2

## Beschreibung

Die Erfindung betrifft ein Verfahren zur Anpassung eines Objektmodells an eine dreidimensionale Punktwolke, bei dem die Punktwolke mittels eines Stereo-Verfahrens aus zwei Bildern erzeugt und ein Clustering-Verfahren auf die Punktwolke angewandt wird, um zu jeweils einem Cluster gehörige Punkte zu identifizieren, und wobei anschließend eine Modellanpassung durchgeführt wird, bei der mindestens ein Objektmodell mindestens einem Cluster überlagert und eine optimale Position des Objektmodells bezüglich des Clusters ermittelt wird, und wobei eine Fehlzuordnung von Punkten mittels des angepassten Objektmodells korrigiert wird.

Zur Identifizierung von Objekten und ihrer dreidimensionalen Lagebestimmung werden Objektmodelle verwendet. Bei der Anpassung eines Objektmodells an eine 3D-Punktwolke kommt es bei bekannten Verfahren (Schmidt, J., Wöhler, C, Krüger, L, Gövert, T., Hermes, C, 2007. 3D Scene Segmentation and Object Tracking in Multiocular Image Sequences. Proc. Int. Conf. on Computer Vision Systems (ICVS), Bielefeld, Germany.) oftmals zu Mehrdeutigkeiten (falsch positive Zuordnungen). Das Objekt wird in der Punktwolke mehrfach gefunden, obwohl es nicht so oft bzw. gar nicht vorhanden ist. Ein weiteres Problem, welches sich auf die Modellanpassung bezieht, ist die Ungenauigkeit der Anpassung. Derzeit übliche Stereoverfahren basieren meist auf der Suche von Merkmalen (Kanten, Punkte, Ecken, Pixelblöcke, usw.) in einem linken und einem rechten Bild und der anschließenden Zuordnung gleicher/ähnlicher Merkmale zueinander. Alternativ werden oftmals auch die Inhalte lokaler Bildfenster hinsichtlich ihrer Ähnlichkeit untersucht. Der so genannte Disparitätswert wird dann ermittelt, indem man den Versatz der zugeordneten Merkmale oder Bildfenster im linken und im rechten Bild zueinander bestimmt. Unter der Voraussetzung eines kalibrierten Kamerasystems kann durch Triangulation anschließend aus dem Disparitätswert dem zugehörigen Bildpunkt ein Tiefenwert zugeordnet werden. In manchen Fällen kommt es zu falschen Tiefenwerten aufgrund fehlerhafter Zuordnung. Dies geschieht häufig bei sich wiederholenden Strukturen im Bild, wie z. B. Finger der Hand, Wald, etc. bei kantenbasierten Stereoverfahren. Die aus der Fehlzuordnung entstehenden 3D-Punkte bezeichnet man als Fehlkorrespondenzen bzw. Ausreißer. Abhängig von der Wahl von Merkmalen tritt dieser Effekt mehr oder wenig häufig auf, ist aber ohne weitere Annahmen grundsätzlich nie auszuschließen. Diese Fehlkorrespondenzen beeinflussen die Anpassung des Objektmodells negativ, da sie zu einer Verschlechterung der Repräsentation der Szene durch die 3D-Punktwolke führen.

In der Literatur sind verschiedene Verfahren bekannt, die sich mit dem Problem der Fehlkorrespondenzen beschäftigen. Ein Großteil der Methoden versucht, die Ausreißer zu erkennen, um sie anschließend zu eliminieren. Nachteil hierbei ist die geringer werdende Anzahl an 3D-Punkten bzw. der dadurch verursachte Verlust an Information. Andere Verfahren [Hirschmuller, H., 2005. Accurate and Efficient Stereo Processing by Semi-Global Matching and Mutual Information, Proc. IEEE Conf. on Computer Vision and Pattern Recognition, San Diego, USA.] wiederum versuchen, beispielsweise durch Annahme von abschnittsweise glatten Oberflächen das Problem zu unterdrücken. Durch solche Glattheitsannahmen werden feine Strukturen nicht mehr erkennbar, was zu einem Informationsverlust führt. Außerdem liefern diese Verfahren nur dort gute Ergebnisse, wo wirklich mit glatten Oberflächen zu rechnen ist.

Es ist eine Aufgabe der Erfindung, ein verbessertes Verfahren zur Anpassung eines Objektmodells an eine dreidimensionale Punktwolke anzugeben.

Die Aufgabe wird erfindungsgemäß gelöst durch ein Verfahren mit den Merkmalen des Anspruchs 1.

Vorteilhafte Weiterbildungen sind Gegenstand des Unteranspruches.

Bei einem erfindungsgemäßen Verfahren zur Anpassung eines Objektmodells an eine dreidimensionale Punktwolke wird die Punktwolke mittels eines Stereo-Verfahrens aus zwei Bildern erzeugt und ein Clustering-Verfahren auf die Punktwolke angewandt, um zu jeweils einem Cluster gehörige Punkte zu identifizieren.

Zur Erzeugung der dreidimensionalen Punktwolke kann ein beliebiges Stereoverfahren eingesetzt werden, insbesondere ein raum-zeitliches Stereoverfahren, wie es in [Schmidt, J. Wöhler, C., Krüger, L., Gövert, T. Hermes, C. 2007. 3D Scene Segmentation and Object Tracking in Multiocular Image Sequences. Proc. Int. Conf. On Computer Vision Systems (ICVS), Bielefeld, Germany] beschrieben ist. In dieser Schrift, die hier durch Bezugnahme eingebunden ist, ist auch ein Clustering-Verfahren beschrieben, das beispielsweise im erfindungsgemäßen Verfahren eingesetzt werden kann.

Beim Clustering werden Punkte der Punktwolke, von denen angenommen wird, dass sie zu demselben Objekt gehören, zu so genannten Clustern zusammengefasst.

Auf das Clustering folgend findet eine Modellanpassung statt, bei der mindestens ein Objektmodell mindestens einem Cluster überlagert und eine optimale Position des Objektmodells bezüglich des Clusters ermittelt wird. Hierbei kann insbesondere ein Modellanpassungsverfahren eingesetzt werden, wie es in [Zhang, Z., 1992. Iterative Point Matching for Registration of Free-Form Curves, INRIA Technical Report 1658] beschrieben ist, das hier durch Bezugnahme eingebunden ist.

Infolge der Modellanpassung können einem Cluster fälschlicherweise zugeordnete Punkte identifiziert und eliminiert werden. Ebenso können fälschlicherweise außerhalb des betrachteten Clusters isoliert oder in einem anderen Cluster liegende Punkte, so genannte Ausreißer, als dem betrachteten Cluster zugehörig identifiziert und die Zuordnung entsprechend korrigiert werden.

Zusätzlich wird aus mindestens einem der beiden Bilder eine so genannte Wahrscheinlichleitskarte erstellt, die im Folgenden, wie in der Literatur üblich, als Attention-Map bezeichnet wird. Die Erstellung der Attention-Map ist im Detail in [Tanaka, M., Hotta, K., Kurita, T., Mishima, T., 2008. Dynamic Attention Map by Ising Model for Human Face Detection, Int. Conf. On Pattern Recognition, Brisbane, Australia.] beschrieben. Diese Veröffentlichung ist hier ebenfalls durch Bezugnahme eingebunden. Zur Erstellung der Attention-Map wird ein Klassifikator benutzt, beispielsweise der in [Wöhler, C., Anlauf, J. K., 1999. A Time Delay Neural Network Algorithm for Estimating Image-pattern Shape and Motion, Image and Vision Computing 17, pp. 281-294] beschriebene TDNN. Auch diese Veröffentlichung ist hier durch Bezugnahme eingebunden. Dieser Klassifikator wird zuvor mit Beispielbildern eines Beispielobjekts trainiert. Mit der Attention-Map kann eine Aussage darüber getroffen werden, ob sich ein dem Beispielobjekt ähnliches Objekt in der Szene befindet bzw. wie viele dieser Objekte in der Szene vorhanden sind. Die Attention-Map erlaubt darüber hinaus eine Aussage darüber, wie wahrscheinlich es ist, dass sich ein solches Objekt an einem bestimmten Ort befindet.

Die Attention-Map wird nun unterstützend beim Clustering-Verfahren und/oder bei der Modellanpassung berücksichtigt. Beim Clustering-Verfahren dient die Attention-Map der Selektion geeigneter Cluster für die nachfolgende Modellanpassung. Bei der Modellanpassung kann die Attention-Map insbesondere zur Berechnung einer initialen Pose des Objektmodells benutzt werden, von der ausgehend die Modellanpassung vorgenommen wird. Hierdurch verbessert sich das Konvergenzverhalten der Modellanpassung. Eine gute Initialisierung führt bei der Modellanpassung zudem dazu, dass das Problem von lokalen Minima umgangen wird, die zu einer suboptimalen Anpassung führen können.

Es können mehrere Iterationen des erfindungsgemäßen Verfahrens durchgeführt werden, wobei nach der Korrektur der Fehlzuordnungen in das Stereoverfahren rückgekoppelt wird, um die Korrespondenzzuordnung an dieser Stelle nicht nur für diesen Punkt, sondern gegebenenfalls für weitere betroffene Punkte zu verbessern. Dabei kann für jeden Punkt eine Wahrscheinlichkeit seines Aufenthaltsortes in der dreidimensionalen Punktwolke bestimmt werden, da er sich möglichst auf der Oberfläche des dem Objektmodell ähnelnden Objekts bzw. Clusters befinden muss. Auf diese Weise wird bei der Bildung von Korrespondenzen im Stereo-Verfahren nicht nur die Ähnlichkeit von Bildbereichen, sondern auch die Wahrscheinlichkeit des Aufenthaltsortes berücksichtigt, wodurch sich die Qualität der Punktwolke verbessert, da weniger Fehlzuordnungen auftreten. Beispielsweise wird bei Betrachtung von Fingern einer Hand, die einander sehr ähnlich sind, ein Punkt mit höherer Wahrscheinlichkeit dem richtigen Finger anstatt einem benachbarten Finger zugeordnet.

Im Folgenden wird ein Ausführungsbeispiel der Erfindung anhand einer Zeichnung näher erläutert.

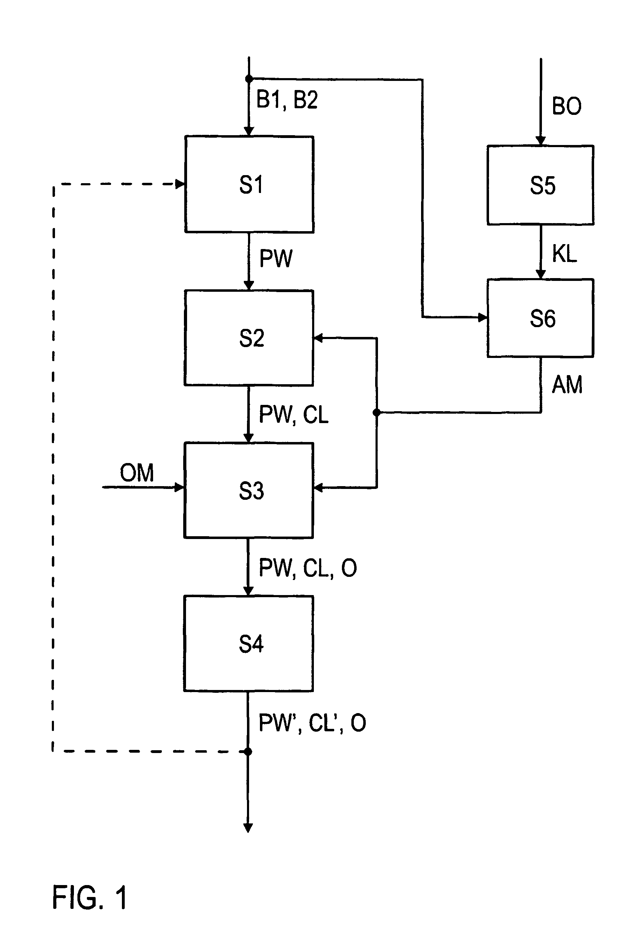

Die einzige Figur zeigt ein Ablaufdiagramm eines Ausführungsbeispiels des Verfahrens zur Anpassung eines Objektmodells an eine dreidimensionale Punktwolke.

In der Figur ist ein Ablaufdiagramm eines Ausführungsbeispiels des Verfahrens zur Anpassung eines Objektmodells OM an eine dreidimensionale Punktwolke PW gezeigt. Zunächst werden zwei stereoskopisch aufgenommene Bilder B1, B2 einem Stereo-Verfahren S1 zugeführt. Dieses bildet Korrespondenzpaare aus Punkten beider Bilder B1, B2. Das Resultat ist eine dreidimensionale Punktwolke PW. Mit einem Clusteringverfahren S2 wird die Punktwolke PW segmentiert, das heißt Cluster CL mit zusammengehörigen Punkten gebildet.

Auf das Clusteringverfahren S2 folgend findet eine Modellanpassung S3 statt, bei der mindestens ein Objektmodell OM mindestens einem Cluster CL überlagert und eine optimale Position des Objektmodells OM bezüglich des Clusters CL ermittelt wird.

Mit den nun in ihrer Lage und Pose identifizierten Objekten O können während einer Korrektur S4 von Fehlzuordnungen einem Cluster CL fälschlicherweise zugeordnete Punkte identifiziert und eliminiert werden. Ebenso können fälschlicherweise außerhalb des betrachteten Clusters CL isoliert oder in einem anderen Cluster CL liegende Punkte, so genannte Ausreißer, als dem betrachteten Cluster CL zugehörig identifiziert und die Zuordnung entsprechend korrigiert werden, wobei eine korrigierte Punktwolke PW' und korrigierte Cluster CL' entstehen.

Die Schritte Clusteringverfahren S2 und/oder Modellanpassung S3 werden mittels einer Wahrscheinlichkeitskarte AM unterstützt, die den Gepflogenheiten in der Literatur entsprechend im Folgenden als Attention-Map AM bezeichnet wird.

Die Attention-Map AM wird in einem Erstellungsschritt S6 aus mindestens einem der beiden Bilder B1, B2 erstellt. Zur Erstellung der Attention-Map AM wird ein Klassifikator KL benutzt. Dieser Klassifikator KL wird zuvor mit Beispielbildern eines Beispielobjekts BO in einem Trainingsschritt S5 trainiert. Mit der Attention-Map AM kann eine Aussage darüber getroffen werden, ob sich ein dem Beispielobjekt BO ähnliches Objekt O in der Szene befindet bzw. wie viele dieser Objekte O in der Szene vorhanden sind. Die Attention-Map AM erlaubt darüber hinaus eine Aussage darüber, wie wahrscheinlich es ist, dass sich ein solches Objekt O an einem bestimmten Ort befindet.

Beim Clustering-Verfahren S2 dient die Attention-Map AM der Selektion geeigneter Cluster CL für die nachfolgende Modellanpassung S3. Bei der Modellanpassung S3 kann die Attention-Map AM insbesondere zur Berechnung einer initialen Pose des Objektmodells OM benutzt werden, von der ausgehend die Modellanpassung S3 vorgenommen wird.

Es können mehrere Iterationen des erfindungsgemäßen Verfahrens durchgeführt werden, wie mit der gestrichelten Linie angedeutet ist, wobei nach der Korrektur der Fehlzuordnungen S4 in das Stereoverfahren S1 rückgekoppelt wird.

### Bezugszeichenliste

AM Attention-Map, Wahrscheinlichkeitskarte
B1, B2 Bild
BO Beispielobjekt
CL, CL' Cluster
O Objekt
OM Objektmodell
PW, PW' Punktwolke
S1 Stereo-Verfahren
S2 Clusteringverfahren
S3 Modellanpassung
S4 Korrektur von Fehlzuordnungen
S5 Trainingsschritt
S6 Erstellungsschritt der Attention-Map

## Patentansprüche

1. Verfahren zur Anpassung eines Objektmodells (OM) an eine dreidimensionale Punktwolke (PW), bei dem die Punktwolke (PW) mittels eines Stereo-Verfahrens (S1) aus zwei Bildern (B1, B2) erzeugt und ein Clustering-Verfahren (S2) auf die Punktwolke (PW) angewandt wird, um zu jeweils einem Cluster (CL) gehörige Punkte zu identifizieren, und wobei anschließend eine Modellanpassung (S3) durchgeführt wird, bei der mindestens ein Objektmodell (OM) mindestens einem Cluster (CL) überlagert und eine optimale Position des Objektmodells (OM) bezüglich des Clusters (CL) ermittelt wird, und wobei eine Korrektur (S4) von Fehlzuordnungen von Punkten mittels des angepassten Objektmodells (OM) durchgeführt wird, **dadurch gekennzeichnet, dass** ein mittels mindestens eines Beispielobjekts (BO) trainierter Klassifikator (KL) zur Erstellung einer Wahrscheinlichkeitskarte (AM) aus mindestens einem der Bilder (B1, B2) verwendet wird, wobei aus der Wahrscheinlichkeitskarte (AM) eine Anzahl und/oder Aufenthaltswahrscheinlichkeit mindestens eines dem Beispielobjekt (BO) ähnelnden Objekts (O) im Bild (B1, B2) bestimmt wird, wobei die Wahrscheinlichkeitskarte (AM) beim Clustering-Verfahren (S2) und/oder bei der Modellanpassung (S3) berücksichtigt wird.

2. Verfahren nach Anspruch 1, **dadurch gekennzeichnet, dass** mittels der Wahrscheinlichkeitskarte (AM) eine initiale Pose des Objektmodells (OM) bestimmt wird, von der ausgehend die Modellanpassung (S3) vorgenommen wird.

## Claims

1. A method for matching an object model (OM) to a three-dimensional point cloud (PW), wherein the point cloud (PW) is generated from two images (B1, B2) by means of a stereo method (S1) and a clustering method (S2) is applied to the point cloud (PW) in order to identify points belonging to respectively one cluster (CL), and wherein model matching (S3) is subsequently carried out, with at least one object model (OM) being superposed on at least one cluster (CL) and an optimum position of the object model (OM) with respect to the cluster (CL) being determined, and wherein a correction (S4) of false assignments of points is carried out by means of the matched object model (OM), **characterized in that** a classifier (KL), trained by means of at least one exemplary object (BO), is used to generate an attention map (AM) from at least one of the images (B1, B2), with a number and/or location probability of at least one object (O), which is similar to the exemplary object (BO), being determined in the image (B1, B2) using the attention map (AM), and with the attention map (AM) being taken into account in the clustering method (S2) and/or in the model matching (S3).

2. The method of claim 1, **characterized in that** an initial pose of the object model (OM) is determined using the attention map (AM), with the model matching (S3) is carried out starting from the initial pose.

## Revendications

1. Procédé d'ajustement d'un modèle d'objet (OM) sur un nuage tridimensionnel de points (PW), dans lequel le nuage de points (PW) est généré au moyen d'un procédé stéréoscopique (S1) à partir de deux images (B1, B2) et un procédé de groupement (S2) est appliqué au nuage de points (PW) pour identifier des points appartenant à un groupement (CL) respectif, et dans lequel un ajustement de modèle (S3) est ensuite effectué, dans lequel l'au moins un modèle d'objet (OM) est superposé à au moins un groupement (CL) et une position optimale du modèle d'objet (OM) est déterminée par rapport au groupement (CL), et dans lequel une correction (S4) d'associations erronées de points est effectuée au moyen du modèle d'objet (OM) ajusté, **caractérisé en ce qu'**un classificateur (KL) entraîné sur au moins un exemple d'objet (BO) est utilisé pour créer une carte de probabilité (AM) à partir d'au moins l'une des images (B1, B2), dans lequel un nombre et/ou une probabilité de présence d'au moins un objet (O) ressemblant à l'exemple d'objet (BO) est déterminé(e) dans l'image (B1, B2) à partir de la carte de probabilité (AM), dans lequel la carte de probabilité (AM) est prise en compte lors du procédé de groupement (S2) et/ou lors de l'ajustement de modèle (S3).

2. Procédé selon la revendication 1, **caractérisé en ce qu'**une pose initiale du modèle d'objet (OM) est déterminée au moyen de la carte de probabilité (AM), pose à partir de laquelle l'ajustement de modèle (S3) est effectué.
